**Europäisches Patentamt**

**European Patent Office**

**Office européen des brevets**

(19)

(11) Numéro de publication: **0 074 872**
**B1**

(12) # FASCICULE DE BREVET EUROPEEN

(45) Date de publication du fascicule du brevet:
**16.01.85**

(51) Int. Cl.⁴: **B 23 Q 1/16**

(21) Numéro de dépôt: **82401582.0**

(22) Date de dépôt: **25.08.82**

(54) **Appareil de positionnement.**

(30) Priorité: **26.08.81 FR 8116604**

(43) Date de publication de la demande:
**23.03.83 Bulletin 83/12**

(45) Mention de la délivrance du brevet:
**16.01.85 Bulletin 85/3**

(84) Etats contractants désignés:
**DE GB IT**

(56) Documents cités:
**DE - A - 2 925 953**
**DE - C - 128 031**
**FR - A - 1 287 520**
**GB - A - 903 569**
**GB - A - 1 039 225**
**US - A - 2 408 231**
**US - A - 3 022 066**
**US - A - 3 700 228**

(73) Titulaire: **SOCIETE ANONYME AUTOMOBILES CITROEN, 117 à 167, Qual André Citroen, F-75747 Paris Cedex 15 (FR)**
Titulaire: **AUTOMOBILES PEUGEOT, 75, avenue de la Grande Armée, F-75116 Paris (FR)**

(72) Inventeur: **Biannic, René Joseph, 14, rue du Coteau Orgères, F-35230 St Erblon (FR)**

(74) Mandataire: **Boivin, Claude, 9, rue Edouard-Charton, F-78000 Versailles (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

La présente invention concerne un appareil de positionnement permettant d'orienter un élément porte-pièce autour de deux axes différents, par exemple orthogonaux.

Cet appareil est du type comme décrit par exemple par le brevet US-A N° 3700228 comprenant un élément porte-pièce monté pivotant par rapport à un support autour d'un premier axe, ce support étant lui-même monté pivotant par rapport à un premier support intermédiaire autour d'un second axe, des moyens pour faire pivoter l'élément porte-pièce par rapport à son support, et des moyens pour faire pivoter ce support par rapport au premier support intermédiaire, l'élément porte-pièce étant fixé à un arbre relié à un arbre de transmission qui est coaxial à l'axe de pivotement du support de l'élément porte-pièce par rapport au premier support intermédiaire et qui est relié à un arbre moteur porté par le support intermédiaire.

Il est facile dans un appareil de ce genre de commander à l'aide d'un moteur le pivotement du support par rapport au premier support intermédiaire. Par contre, la commande à l'aide d'un moteur de pivotement de l'élément porte-pièce par rapport à son support pose un problème. En effet, on pourrait prévoir un moteur d'entraînement porté par ce support. Mais ce dernier serait alors relativement lourd et il faudrait de ce fait un moteur très puissant pour faire pivoter le support par rapport au premier support intermédiaire. Il est donc avantageux que le moteur d'entraînement soit porté par le support intermédiaire ou par un bâti par rapport auquel le premier support intermédiaire est éventuellement mobile. Mais la transmission du mouvement du moteur à l'élément porte-pièce est alors très compliquée si l'on désire que les deux mouvements soient indépendants, du fait du pivotement du support par rapport au premier support intermédiaire.

La présente invention a pour objet un appareil de positionnement du type ci-dessus dans lequel le mouvement de pivotement de l'élément porte-pièce par rapport à son support est obtenu de manière très simple à partir d'un arbre moteur porté par le premier support intermédiaire.

L'appareil selon l'invention est caractérisé en ce que le premier support intermédiaire est porté par deux bras qui sont articulés sur un deuxième support intermédiaire autour d'un même axe, en ce que ledit arbre moteur est relié par une transmission portée par l'un des bras, à un premier moteur porté par ce deuxième support intermédiaire, et en ce que les moteurs de pivotement du support de l'élément porte-pièce par rapport au premier support intermédiaire sont reliés à un second arbre moteur lui-même relié par une transmission portée par l'autre bras à un second moteur également porté par le deuxième support intermédiaire.

La transmission du mouvement de l'arbre moteur à l'élément porte-pièce est ainsi très simple. Cependant, le mouvement de pivotement du support de l'élément porte-pièce par rapport au premier support intermédiaire n'est pas indépendant; il entraîne un mouvement de pivotement parasite de l'élément porte-pièce par rapport à son support. Mais il est facile d'y remédier soit en tenant compte de ce mouvement parasite dans le mouvement de pivotement qu'on imprime à l'élément porte-pièce, soit en prévoyant des moyens de compensation électroniques.

Par ailleurs, l'élément porte-pièce dispose de trois degrés de liberté. On peut non seulement le faire pivoter suivant deux axes différents, mais on peut régler par exemple sa position en hauteur si les bras sont articulés par rapport au second support intermédiaire autour d'un axe horizontal. De plus, les deux moteurs de commande des mouvements de pivotement sont portés par le second support intermédiaire, c'est-à-dire par un organe ne subissant pas de mouvement de pivotement; les masses à faire pivoter sont ainsi relativement faibles et les moteurs de commande peuvent n'avoir qu'une puissance réduite.

Le premier support intermédiaire peut être articulé sur les bras, autour de l'axe des deux arbres moteurs et être relié au second support intermédiaire par un bras manivelle et une tringle.

Le bras manivelle et la tringle peuvent former avec les bras et le second support intermédiaire un parallélogramme articulé. Dans ce cas, le premier support intermédiaire a un mouvement de translation lorsque les bras pivotent.

La tringle peut également avoir une longueur réglable. Dans ce cas, on peut faire pivoter le premier support intermédiaire par rapport aux bras et l'élément porte-pièce bénéficie d'un degré de liberté supplémentaire.

Le second support intermédiaire est avantageusement constitué par un chariot pouvant se déplacer horizontalement par rapport au bâti fixe. L'élément porte-pièce jouit ainsi de quatre degrés de liberté et même de cinq si la tringle est de longueur réglable, de sorte qu'on peut pratiquement amener l'élément porte-pièce dans toute position désirée.

Pour faire pivoter les bras par rapport au chariot, ces bras sont avantageusement fixés sur un arbre qui est monté pivotant par rapport au chariot et porte un pignon relié à un second pignon monté sur un arbre cannelé, lui-même monté pivotant par rapport au bâti et relié à un moteur d'entraînement porté par ce bâti. Ce moteur d'entraînement est ainsi disposé à poste fixe. Il est avantageux que l'arbre cannelé soit coaxial au pivot de la tringle sur le chariot.

L'appareil selon l'invention est particulièrement applicable à la mise en position d'une pièce qui doit être transférée d'une machine à une autre en occupant des positions différentes dans les deux machines. Dans ce cas, la direction de déplacement du chariot par rapport au bâti fixe doit être différente de la direction de transfert, par exemple perpendiculaire à cette dernière direction.

On a décrit ci-après, à titre d'exemple non limitatif, un mode de réalisation de l'appareil selon l'invention, avec référence aux dessins annexés dans lesquels:

la fig. 1 est un schéma montrant l'utilisation de la machine;

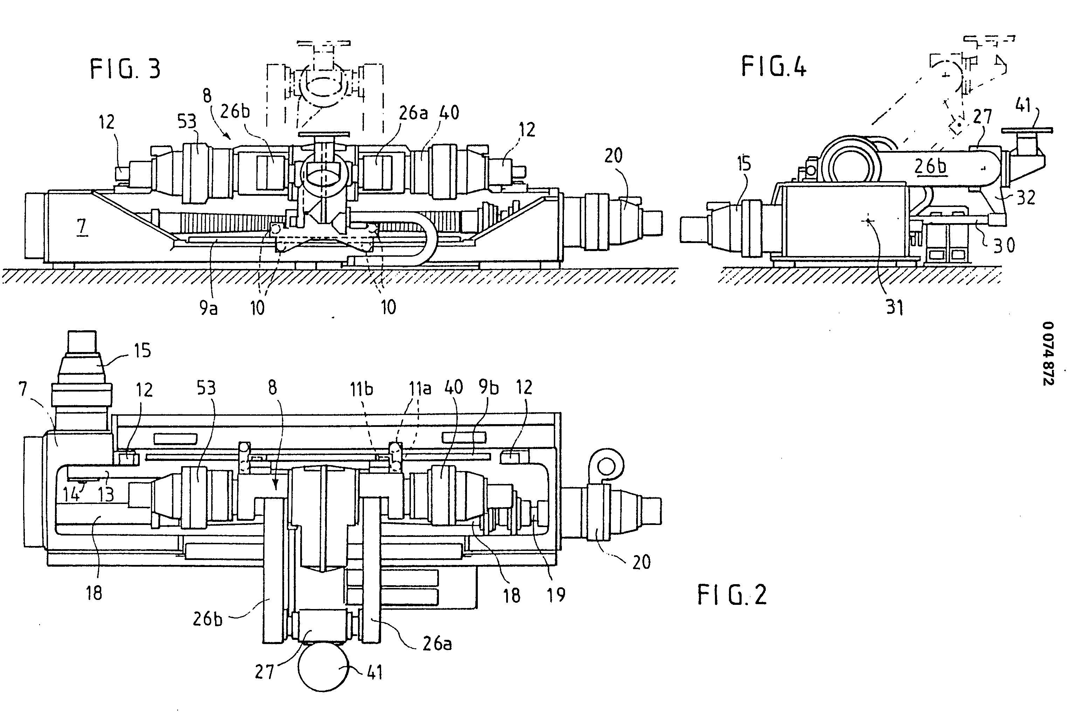

la fig. 2 en est une vue en plan;

la fig. 3 en est une vue en élévation;

la fig. 4 en est une vue en bout;

la fig. 5 est une vue en coupe transversale du coulisseau de l'appareil;

la fig. 6 en est une coupe suivant VI-VI de la fig. 5;

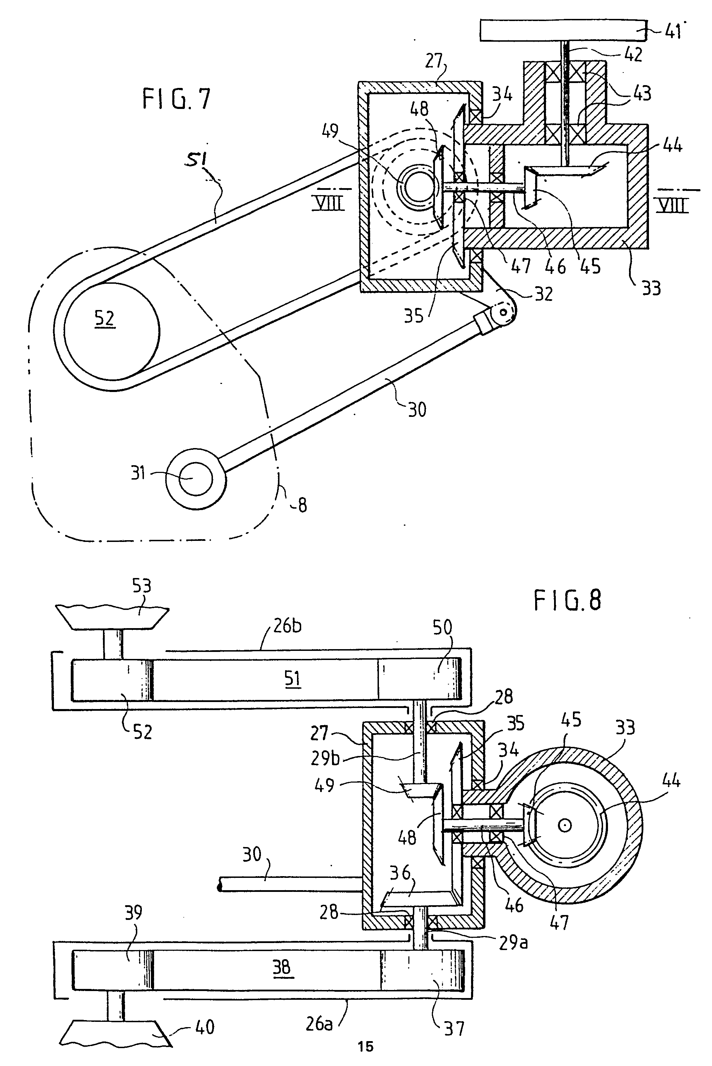

la fig. 7 est une vue schématique en élévation montrant le montage de l'élément porte-pièce de l'appareil par rapport au coulisseau;

la fig. 8 est une vue en coupe horizontale suivant VIII-VIII de la fig. 7;

la fig. 9 montre une variante de la fig. 7.

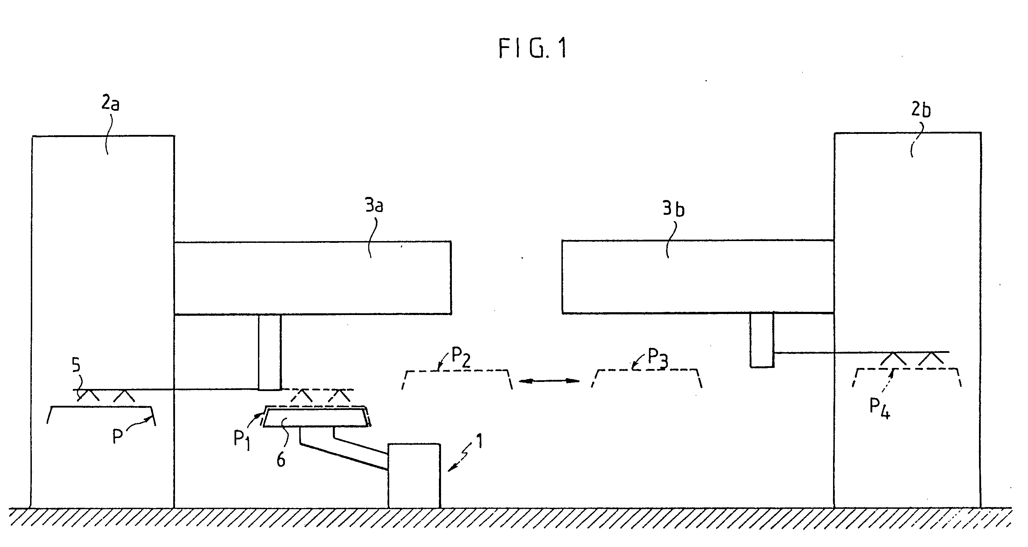

Tel qu'il est représenté à la fig. 1, l'appareil est destiné à mettre en position une pièce P et est désigné d'une façon générale par la référence 1; il est interposé à poste fixe entre d'une part une première machine 2a, par exemple une presse, et un dispositif de translation 3a, et d'autre part par un dispositif de transport intermédiaire, un deuxième dispositif de translation 3b et une deuxième machine 2b qui peut également être une presse. En fonctionnement, le dispositif de translation 3a saisit, par exemple à l'aide de ventouses 5, une pièce P qui vient de subir une opération donnée dans la machine 2a et l'amène en $P_1$ sur une forme de support 6 portée par l'appareil 1. Ce dernier modifie la position angulaire de l'objet P, sa position en hauteur ainsi que sa position dans une direction perpendiculaire en plan du dessin et l'amène en $P_2$ au dispositif de transport intermédiaire. Celui-ci délivre en $P_3'$ la pièce au deuxième dispositif de translation 3b qui l'amène à la deuxième machine 2b comme indiqué en $P_4$.

L'appareil 1 comprend un bâti fixe 7 par rapport auquel un chariot 8 peut se déplacer horizontalement, dans une direction qui est perpendiculaire au plan de la fig. 1, donc à la direction de transfert. A cet effet, le bâti 7 est solidaire d'un rail inférieur 9a coopérant avec des galets 10 dont les axes sont horizontaux et portés par le chariot 8, et d'un rail supérieur 9b coopérant avec des galets 11a et 11b dont les axes sont respectivement verticaux et horizontaux et qui sont également portés par le chariot 8. La référence 12 désigne des amortisseurs de fin de course.

Sur le chariot 8 est fixé l'un des brins d'une courroie crantée 13 qui passe sur une poulie d'entraînement calée sur l'arbre de sortie 14 d'un groupe motoréducteur 15 porté par le bâti 7.

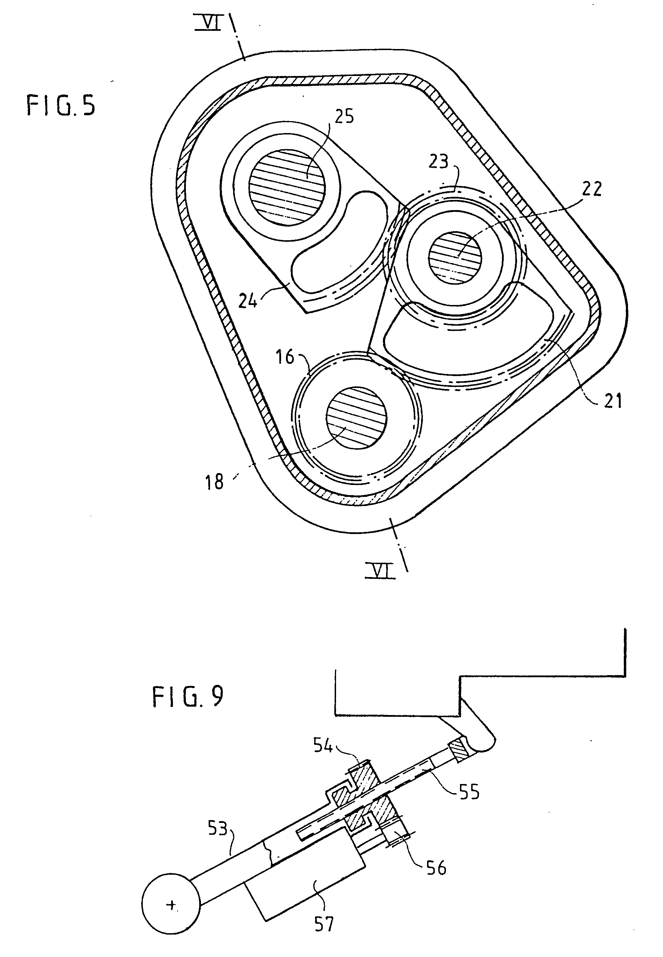

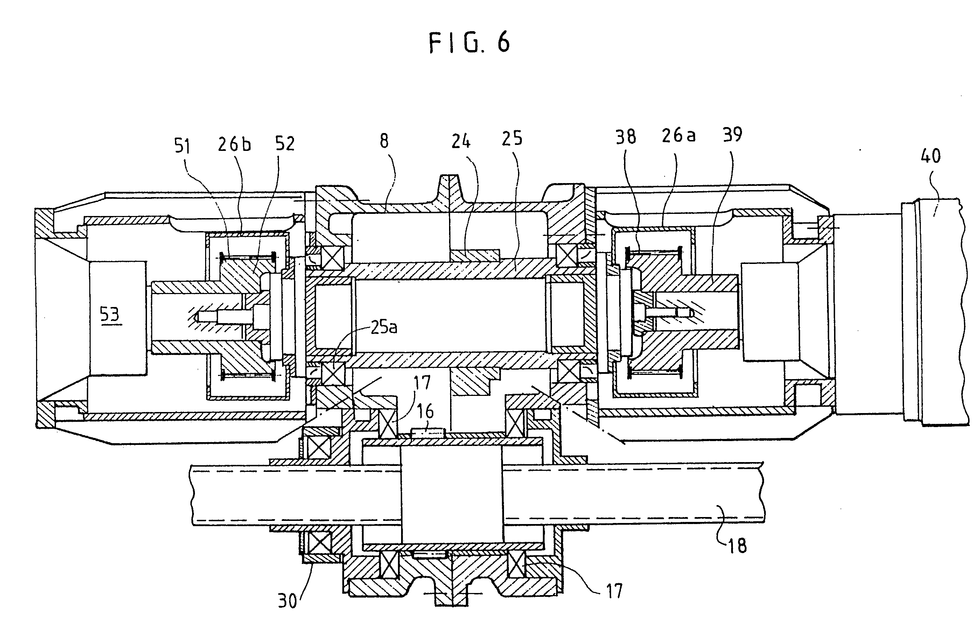

Un pignon 16 est monté à rotation par rapport au chariot 8 par l'intermédiaire de roulements 17 (fig. 6). Ce pignon est claveté coulissant sur un arbre cannelé 18 qui est monté à rotation dans des paliers fixes non visibles au dessin et est relié à l'arbre de sortie 19 d'un groupe motoréducteur 20 porté par le bâti 7. Le pignon 16 est en prise avec un secteur denté 21 calé sur un arbre 22 monté à rotation par rapport au chariot 8 (voir fig. 5). Sur cet arbre est calé un pignon 23 en prise avec un deuxième secteur denté 24 calé sur un arbre 25 qui est monté pivotant par rapport au chariot 8 par l'intermédiaire de roulements 25a. On voit ainsi que le groupe motoréducteur 20 permet de faire pivoter l'arbre 25, quelle que soit la position du chariot 8 par rapport au bâti 1.

Sur l'arbre 25 sont fixés deux bras 26a et 26b. Un support intermédiaire ou auxiliaire 27 est monté pivotant par l'intermédiaire de roulements 28 autour de deux demi-arbres 29a et 29b portés par ces bras. Une biellette 30 est articulée d'une part sur le chariot 8, autour de l'axe 31 de l'arbre cannelé 18, et d'autre part sur un bras 32 solidaire du support 27. La bielle 30 est parallèle aux bras 26a et 26b et de même longueur que ceux-ci. L'ensemble constitue donc un parallélogramme articulé de sorte que le support 27 se déplace en restant parallèle à lui-même lorsque l'arbre 25 pivote.

Un support 33 est monté pivotant par rapport au support auxiliaire 27, par l'intermédiaire de roulements 34 dont l'axe est perpendiculaire à celui des deux demi-arbres 29a et 29b. Ce support est solidaire d'un pignon 35 en prise avec un pignon 36 calé sur le demi-arbre 29a. Ce dernier porte une poulie 37 qui est reliée par une courroie 38 passant à l'intérieur du bras 26a à une poulie 39 calée sur l'arbre de sortie d'un groupe motoréducteur 40 porté par le chariot 8. Cet arbre de sortie est coaxial à l'arbre 25.

Un plateau porte-pièce 41 est fixé sur un arbre 42 qui est monté pivotant dans le support 33 par l'intermédiaire de roulements 43 et dont l'axe est perpendiculaire à l'axe de pivotement de ce support et à celui des deux demi-arbres 29a et 29b. L'arbre 42 porte un pignon 44 qui est en prise avec un pignon conique 45. Celui-ci est fixé sur un arbre 46 qui est coaxial à l'axe de pivotement du support 33 et est porté par ce support par l'intermédiaire de roulements 47.

L'arbre 46 porte un second pignon conique 48 en prise avec un pignon conique 49 calé sur le demi-arbre 29b. Ce dernier porte une poulie 50 qui est reliée par une courroie 51 passant à l'intérieur du bras 26b à une poulie 52 calée sur l'arbre de sortie, coaxial à l'arbre 25, d'un groupe motoréducteur 53 porté par le chariot 8.

Pour amener la pièce P de la position $P_1$ à la position $P_2$, on commande le moteur 15 de façon à déplacer la pièce dans la direction perpendiculaire au plan de la fig. 1, ainsi que le moteur 20 pour le déplacer en hauteur. Ce déplacement s'accompagne d'un déplacement parasite dans le sens de transfert; mais on compense ce déplacement en modifiant en conséquence la course du dispositif de transfert intermédiaire 4. Par action sur le moteur 40, on règle l'inclinaison par rapport à l'axe vertical de l'axe du plateau support 41, c'est-à-dire de l'arbre 42. Lorsque le support 33 pivote, le pignon 44, qui est en prise avec le pignon 45 fixe et dont l'axe se déplace, pivote également. L'inclinaison de l'axe du plateau support 41 s'accompagne donc d'un pivotement parasite de ce plateau. Enfin, par action sur le moteur 53, on fait pivoter le plateau 41 autour de son axe pour lui donner la position désirée, compte tenu du pivotement parasite indiqué ci-dessus.

Dans la variante de la fig. 9, la bielle 30 est remplacée par une bielle de longueur réglable comprenant un élément 53 dans lequel un écrou 54 peut tourner, mais est immobilisé axialement, et une vis 55 montée dans cet écrou. L'écrou 54 est taillé extérieurement en forme de pignon et est en prise avec un pignon 56 calé sur l'arbre de sortie d'un moteur 57 solidaire de l'élément 53. Le moteur 57 permet ainsi de faire pivoter le support auxiliaire 27 autour de l'axe des demi-arbres 29a et 29b. Comme dans cette variante on peut, compte tenu des déplacements permis par les dispositifs 3a, 3b et 4, déplacer le plateau 41 dans trois directions orthogonales et le faire pivoter autour de trois axes orthogonaux, on peut amener la pièce P dans n'importe quelle position désirée dans l'espace.

Il va de soi que la présente invention ne doit pas être considérée comme limitée au mode de réalisation décrit et représenté.

**Revendications**

1. Appareil de positionnement comportant un élément porte-pièce (41) monté pivotant par rapport à un support (33) autour d'un premier axe, ce support (33) étant lui-même monté pivotant par rapport à un premier support intermédiaire (27) autour d'un second axe, des moyens pour faire pivoter l'élément porte-pièce (41) par rapport à son support (33), et des moyens pour faire pivoter ce support (33) par rapport au premier support intermédiaire (27), l'élément porte-pièce (41) étant fixé à un arbre (42) relié à un arbre de transmission (46) qui est coaxial à l'axe de pivotement du support (33) de l'élément porte-pièce (41) par rapport au premier support intermédiaire (27) et qui est relié à un arbre moteur (29b) porté par le premier support intermédiaire (27), caractérisé en ce que le premier support intermédiaire (27) est porté par deux bras (26a et 26b) qui sont articulés sur un deuxième support intermédiaire (8), autour d'un même axe, en ce que ledit arbre moteur (29b) est relié par une transmission (50-51-52) portée par l'un des bras (25b), à un premier moteur (53) porté par ce deuxième support intermédiaire (8), et en ce que les moyens de pivotement (35) du support (33) de l'élément porte-pièce (41) par rapport au premier support intermédiaire (27) sont reliés à un second arbre moteur (29a) lui-même relié par une transmission (37-38-39) portée par l'autre bras (26a) à un second moteur (40) également porté par le deuxième support intermédiaire (8).

2. Appareil selon la revendication 1, caractérisé en ce que le premier support intermédiaire (27) est articulé sur les bras (26a et 26b), autour de l'axe des deux arbres moteurs (29a et 29b) et relié au second support auxiliaire (8) par un bras manivelle (32) et une tringle (30).

3. Appareil selon la revendication 2, caractérisé en ce que le bras manivelle (32) et la tringle forment avec les bras (26a et 26b) et le second support intermédiaire (8) un parallélogramme articulé.

4. Appareil selon la revendication 2, caractérisé en ce que la tringle est de longueur réglable.

5. Appareil selon l'une des revendications 1 à 4, caractérisé en ce que le second support intermédiaire (8) est constitué par un chariot pouvant se déplacer horizontalement par rapport à un bâti fixe (7).

6. Appareil selon la revendication 5, caractérisé en ce que les bras (26a et 26b) sont fixés sur un arbre (25) qui est monté pivotant par rapport au chariot (8) et porte un pignon (24) relié à un second pignon (16) monté sur un arbre cannelé (18) lui-même pivotant par rapport au bâti (7) et relié à un moteur d'entraînement porté par ce bâti.

7. Appareil selon la revendication 6, caractérisé en ce que l'arbre cannelé est coaxial au pivot de la tringle (30) sur le chariot (8).

8. Application de l'appareil selon l'une des revendications 5 à 7 à la mise en position d'une pièce devant être transférée d'une machine à une autre en occupant des positions différentes dans les deux machines, la direction de déplacement du chariot (8) par rapport au bâti fixe (7) étant différente de la direction de transfert, par exemple perpendiculaire à cette dernière direction.

**Patentansprüche**

1. Vorrichtung zum Positionieren mit einem in bezug auf einen Support (33) um eine erste Achse drehbar angeordneten Objekthalterungselement (41), wobei dieser Support selbst in bezug auf einen ersten Zwischensupport (27) um eine zweite Achse drehbar angeordnet ist, sowie Mit-teln zur Drehung des Objekthalterungselemen-tes (41) in bezug auf seinen Support (33) und Mittel zur Drehung dieses Supports (33) in bezug zum ersten Zwischensupport (27), wobei das Objekthalterungselement (41) an einer Welle (42) angeordnet ist, die mit einer Übertragungswelle (46) verbunden ist, welche koaxial zur Drehachse des Supports (33) für das Objekthalterungselement (41) in bezug zum ersten Zwischensupport (27) angeordnet und mit einer im ersten Zwi-schensupport (27) gehalterten Antriebswel-le (29b) verbunden ist, dadurch gekennzeichnet, dass der erste Zwischensupport (27) von zwei um die gleiche Achse schwenkbar an einem zweiten Zwischensupport (8) angeordneten Armen (26a, 26b) getragen wird, dass besagte Antriebswelle (29b) über eine Transmission (50, 51, 52), die an einem der Arme (26b) angeordnet ist, mit einem ersten Motor (53) verbunden ist, der an diesem zweiten Zwischensupport (8) angeordnet ist und dass die Mittel (35) zum Drehen des Supports (33) für das Objekthalterungselement (41) in bezug auf den ersten Zwischensupport (27) mit einer zweiten Antriebswelle (29a) verbunden sind, welche selbst über eine am anderen Arm (26a) angeordnete Transmission (37, 38, 39) mit einem zweiten Motor (40) verbunden ist, der ebenfalls am zweiten Zwischensupport (8) angeordnet ist.

2. Vorrichtung nach Anspruch 1, dadurch gekennzeichnet, dass der erste Zwischensupport (27) um die Achse der beiden Antriebswellen (29a und 29b) schwenkbar gelenkig an den Armen (26a und 26b) angeordnet und mit dem zweiten Zwischensupport (8) über einen Kurbelarm (32) und eine Stange (30) verbunden ist.

3. Vorrichtung nach Anspruch 2, dadurch gekennzeichnet, dass der Kurbelarm (32) und die Stange (30) mit den Armen (26a, 26b) und dem zweiten Zwischensupport (8) ein Parallelogrammgestänge bilden.

4. Vorrichtung nach Anspruch 2, dadurch gekennzeichnet, dass die Stange (30) eine einstellbare Länge besitzt.

5. Vorrichtung nach einem der Ansprüche 1 bis 4, dadurch gekennzeichnet, dass der zweite Zwischensupport (8) als Wagen ausgebildet ist, der in bezug auf ein festes Grundgestell (7) in horizontaler Richtung bewegbar ist.

6. Vorrichtung nach Anspruch 5, dadurch gekennzeichnet, dass die Arme (26a und 26b) an einer Welle (25) befestigt sind, die in bezug auf den Wagen (8) drehbar angeordnet ist und ein Antriebsrad (24) trägt, das mit einem zweiten Antriebsrad (16) verbunden ist, welches auf einer kannelierten Welle (18) befestigt ist, die selbst in bezug auf das Grundgestell (7) drehbar angeordnet und mit einem an diesem Grundgestell (7) angeordneten Antriebsmotor verbunden ist.

7. Vorrichtung nach Anspruch 6, dadurch gekennzeichnet, dass die kannelierte Welle koaxial zur Gelenkachse der Stange (30) am Wagen (8) angeordnet ist.

8. Anwendung der Vorrichtung nach einem der Ansprüche 5 bis 7 zum Positionieren eines Objektes, bevor es von einer Maschine an eine andere übergeben wird, wobei es in beiden Maschinen unterschiedliche Stellungen einnimmt und wobei die Verschiebungsrichtung des Wagens (8) in bezug auf das feste Grundgestell (7) von der Richtung der Übergabe verschieden ist, beispielsweise senkrecht zu dieser letzteren Richtung steht.

## Claims

1. Positioning apparatus comprising a piece holding element (41) mounted for pivoting with respect to a support (33) about a first axis, this support (33) being itself mounted for pivoting with respect to a first intermediate support (27) about a second axis, means for causing the piece holding element (41) to pivot with respect to its support (33) and means for causing this support (33) to pivot with respect to the first intermediate support (27), the piece holding element (41) being fixed to a shaft (42) coupled to a transmission shaft (46) which is coaxial to the pivot axis of the support (33) of the piece holding element (41) with respect to the first intermediate support (27) and which is coupled to a drive shaft (29b) carried by the first intermediate support (27), characterized in that the first intermediate support (27) is carried by two arms (26a and 26b) which are mounted on a second intermediate support (8) for pivoting about the same axis, in that said drive shaft (29b) is coupled by a transmission (50-51-52) carried by one of the arms (25b), to a first motor (53) carried by this second intermediate support (8) and in that the pivoting means (35) of the support (33) of the piece holding element (41) with respect to the first intermediate support (27) are coupled to a second drive shaft (29a) itself coupled by a transmission (37-38-39) carried by the other arm (26a) to a second motor (40) also carried by the second intermediate support (8).

2. Apparatus according to claim 1, characterized in that the first intermediate support (27) is mounted on the arms (26a and 26b) for pivoting about the axis of the two drive shafts (29a and 29b) and is coupled to the second auxiliary support (8) by a crank arm (32) and a linkage (30).

3. Apparatus according to claim 2, characterized in that the crank arm (32) and the linkage form with the arms (26a and 26b) of the second intermediate support (8) a hinged parallelogram.

4. Apparatus according to claim 2, characterized in that the linkage is of adjustable length.

5. Apparatus according to one of claims 1 to 4, characterized in that the second intermediate support (8) is formed by a carriage movable horizontally with respect to a fixed frame (7).

6. Apparatus according to claim 5, characterized in that the arms (26a and 26b) are fixed to a shaft (25) which is mounted for pivoting with respect to the carriage (8) and has a pinion (24) connected to a second pinion (16) mounted on a splined shaft (18) itself pivoting with respect to the frame (7) and coupled to a drive motor carried by this frame.

7. Apparatus according to claim 6, characterized in that the splined shaft is coaxial with the pivot of the linkage (30) on the carriage (8).

8. Application of the apparatus according to one of claims 5 to 7 to the positioning of a piece for transfer from one machine to another while occupying different positions in the two machines, the direction of movement of the carriage (8) with respect to the fixed frame (7) being different from the transfer direction, for example perpendicular to this latter direction.

FIG.1

FIG. 3

FIG. 4

FIG. 2

0 074 872

FIG.5

FIG.9

FIG. 6

FIG. 7

FIG. 8

15